Europäisches Patentamt

(19) European Patent Office

Office européen des brevets

(11) **EP 0 596 131 B1**

(12) **EUROPEAN PATENT SPECIFICATION**

(45) Date of publication and mention
of the grant of the patent:
**29.12.1997 Bulletin 1997/52**

(51) Int. Cl.$^6$: **B64C 39/00**, B64C 29/00,
B60V 3/08

(21) Application number: **93905682.6**

(22) Date of filing: **21.01.1993**

(86) International application number:
**PCT/RU93/00019**

(87) International publication number:
**WO 93/24366 (09.12.1993 Gazette 1993/29)**

(54) **FLYING VEHICLE**

FLUGOBJEKT

AERONEF

(84) Designated Contracting States:
**DE ES FR GB IT NL SE**

(30) Priority: **22.05.1992 RU 5037896**

(43) Date of publication of application:
**11.05.1994 Bulletin 1994/19**

(73) Proprietor:
**NAUCHNO-PROIZVODSTVENNAYA
KOOPERATIVNAYA FIRMA "EKIP"
Moscow 111020 (RU)**

(72) Inventors:
- SAVITSKY, Anatoly Ivanovich
  **Moscow, 109262 (RU)**
- SCHUKIN, Lev Nikolaevich
  **Kaliningrad, 141070 (RU)**
- KARELIN, Viktor Georgievich
  **Moscow, 123056 (RU)**
- PUSHKIN, Rostislav Mikhailovich
  **Krasnoarmeisk, 141260 (RU)**
- MASS, Alexandr Mikhailovich
  **Petropavlovsk-Kamchatsk, 683000 (RU)**
- SHIBANOV, Anatoly Petrovich
  **Krasnoarmeisk, 141260 (RU)**
- SCHUKIN, Ilya Lvovich
  **Kaliningrad, 141070 (RU)**
- KHUTSISCHVILI, Vladimir Georgievich
  **Moskovskaya obl., Odintsovo, 143000 (RU)**
- FISCHENKO, Sergei Viktorovich
  **Primorsko-Akhtarsk, 353890 (RU)**
- ERMISCHIN, Alexandr Viktorovich
  **Saratov, 41008 (RU)**
- SOBKO, Alexandr Pavlovich
  **Kaliningrad, 141070 (RU)**

(74) Representative:
**Patentanwälte
Zellentin & Partner
Zweibrückenstrasse 15
80331 München (DE)**

(56) References cited:
| | |
|---|---|
| EP-A- 0 229 536 | FR-E- 90 995 |
| US-A- 3 070 327 | US-A- 3 082 976 |
| US-A- 3 161 377 | US-A- 3 450 374 |
| US-A- 3 684 217 | US-A- 4 026 500 |

## Description

### Technical Field

The present invention relates in general to the field of aviation and more specifically to hovercrafts that can take off from and land on airfields of any class, or even do so under off-field conditions. The invention has particular reference to aircrafts having a fuselage shaped as a thick-section short-span wing.

### Background Art

The present-day state of the art knows airborne vehicles named ground-effect machines (GEM) whose construction combines the features of an aeronautical vehicle and an aircraft (cf. the journal "Krylya Rodiny" (Motherland's Wings) No.11, 1991, pp. 28-29 (in Russian). The GEM fuselage is principally the same as in any conventional aircraft, however, the wings are much shorter and the lenght of the wing chord measures alike that of the fuselage. An air cushion is formed under the wings, which is limited on sides by inflatable skegs which due to their being essentially air-core tires, enable the GEM to operate the year round both on water and under conditons of broken ice. The front GEM portion mounts engines with airscrews from which air is directed under the wings to form a dynamic air cushion.

Ground-effect machines are capable of landing on a sloping bank or shore for taking passengers or undergoing maintenance procedures. However, such machines feature but a low aerodynamic fineness ratio which is in fact the $C_L/C_D$ ratio, where $C_L$ and $C_D$ are the aerodynamic lift and aerodynamic drag, respectively.

The aerodynamic fineness ratio can be increased when nonseparated flow of the wing by an external airflow is ensured, for which purpose the GEM in the form of a thick-section wing must be equipped with the so-called boundary layer control system aimed at binding the external airflow the wing rear surface.

Such a boundary layer control is effected by sucking air off the wall airflow, for which purpose perforations are made in the rear portion of the wing top surface. Air suction is performed by an engine with an airscrew accommodated inside the wing in an inclined duct which opens towards the wing cavity and communicates with the ambient atmosphere on the side of the GEM bottom. During flight the airscrew develops rarefaction in the wing cavity so that air is sucked in from the wing rear surface and is discharged through the inclined duct towards the aircraft rear end, thus creating a lift and providing a level flight of the aircraft.

The GEM discussed above features an adequately low drag due to provision of a nonseparated flow about an airfoil profile; however, it involves high energy consumption due to a large amount of air bled and high level of friction resistance on the GEM rear surface caused by air bleeding through the surface being flown-about. In addition, the GEM take-off and landing system is far from being a perfect one, being incapable of providing GEM stabilization during flight nearby a rough ground surface in the near-the-ground flight mode.

Document EP-A-0 229 536 discloses a ground-effect airborne vehicle with a fuselage in form of a wing which is limited at both lateral sides by vertical planes. A left and a right aileron is positioned at the vertical planes. The front side of the airborne vehicle is rounded whereas the back or stern end is formed as a vertical plane connecting the upper and the lower spaced apart surfaces of the wing. The wing trailing edge and the wing lateral edges provided in this form, however, result in turbulent airflow causing a higher induced drag. Furthermore, this airborne vehicle has a low aspect ratio causing a higher induced drag, too.

An air intake closable by a flap is disposed on the upper surface of the wing and leads to a compressor driven by an engine. Compressed air flows through ducts to elongated air outlets being arranged on the front, back and lateral portions on the lower surface of the wing forming a rectangular air curtain limitation for an air cushion under the fuselage. The air forming the air cushion is supplied by air outlets from a compressed air reservoir inside the airborne vehicle. Movable flaps are provided at the air outlets for controlling the air flow through the air outlets thus controlling the air cushion. However, generating the air cushion using compressed air for its limitation demands great expenditure of energy for its creation.

Furthermore, a thick wing profile - used in this airborne vehicle - will be flowed around with airflow separation at the stern surface of the wing creating strong drag to a forward motion of the airborne vehicle.

Document FR-E-90 995 discloses an alighting gear for airplanes with an air cushion. The air cushion is not generated by supplying air from a compressor but by the dynamic pressure under a wing of the airplane during descending flight. The airplane has a fuselage and a wing as separate elements.

### Disclosure of the Invention

It is a principal object of the present invention to provide a ground-effect airborne vehicle which is capable of:

- take-off from and landing on unimproved airfields and water;

- flying not only in the near-the-ground mode but also under free flight condition with a high aerodynamic fineness ratio;
- stabilization and control of the GEM flight in every mode, including take-off and landing.

The foregoing object is accomplished by a ground-effect airborne vehicle with the features of claim 1. Apart from said (rear) flap, one more (middle) flap may be provided before the rear flap in the middle bottom portion, while the bottom wall of the slotted nozzle can be swivelled and serves as an additional (front) flap.

Such a construction of the alighting gear provides for a uniform loading on the GEM bottom in take-off and landing modes. The skegs are to limit air sidewise spread-out, thereby increased the height of the GEM position over the runway surface. The slotted nozzle ensures air admission to the interior of the air cushion under the GEM bottom in every flight mode. The front flap which is in fact the nozzle wall is aimed, apart from bounding the air-cushion interior, also at control of the flow discharge regime (that is, flow velocity and the pressure level of the nozzle outflow). The rear flap is to vary the flow regime under the GEM bottom. With the rear flap closed the pressure and lift force under the GEM bottom are increased, while with said flap open the air jet is free to flow out from the planar nozzle of the air cushion towards the GEM rear, thus establishing thrust and rarefaction under the GEM bottom when the GEM is close to the runway surface.

The intermediate (middle) flap varies the distribution of forces over the GEM bottom and moment (longitudinal) characteristics.

In an advantageous embodiment the skegs are adjustable for height, in particular, as air-core tires mounted in metal holders and provided with a system of valves.

High aerodynamic characteristics of the proposed aerial vehicle are ensured also due to a specific geometry of its fuselage, that is, the upper surface of the fuselage may be shaped as a cylindrical segment joined at the sides together with spherical fairings. The arrangement of the power plant and cargo and passenger compartment(s) may be alternative, viz, the power plant may be situated under the side fairings, while the cargo and passenger compartment may be located in the interior of the cylindrical segment, or vice versa.

A separating surface may be provided for fixing the position of the flow detachment from the trailing edge, said surface being the boundary between the airflows that stream past the upper and lower fuselage portions. Used as said separating surface may also be a specially provided baffler, or part of the planar nozzle of the power plant engine, or else part of the aerodynamic surfaces (airfoils), that is, wings or stabilizing fins, or part of the surface of the jet vanes. A combination of said elements and airfoils may also be used.

The device for fixing the position of the line of flow detachment along with the boundary layer control system provides for a stable nonseparated flow about the GEM fuselage in every flight mode.

Additional nozzles may be provided at the sides of the fuselage for the purpose of GEM stabilization.

Brief Description of the Drawings

In what follows the present invention is illustrated in a detailed description of a specific exemplary embodiment thereof with reference to the accompanying drawings, wherein:

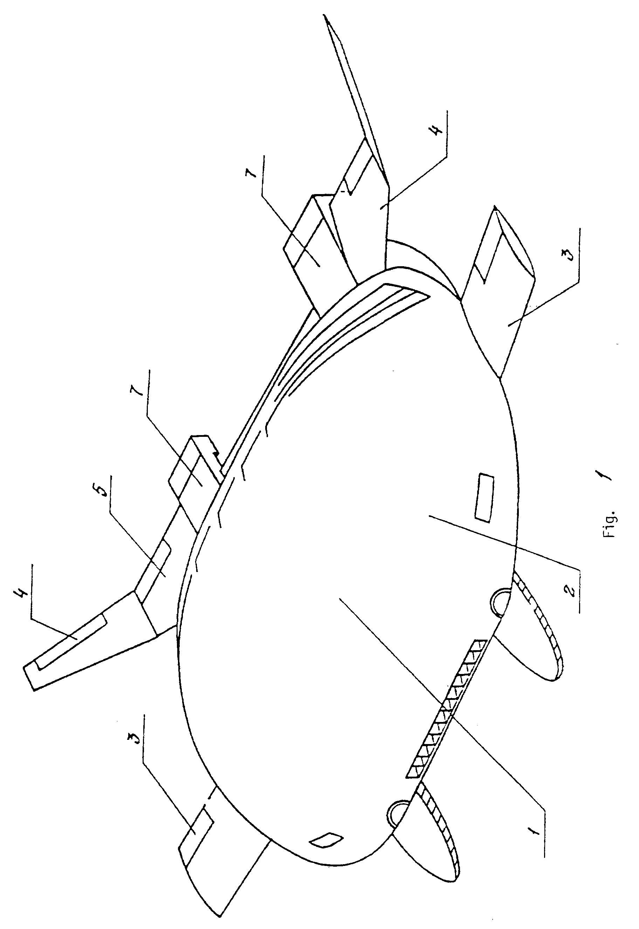

FIG.1 is a general view of the GEM, according to the invention;

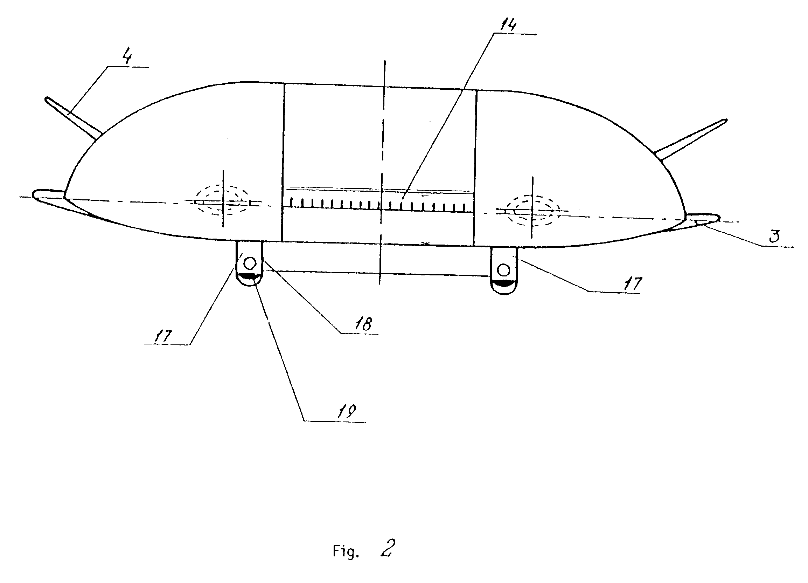

FIG.2 is a front view of the GEM of FIG.1;

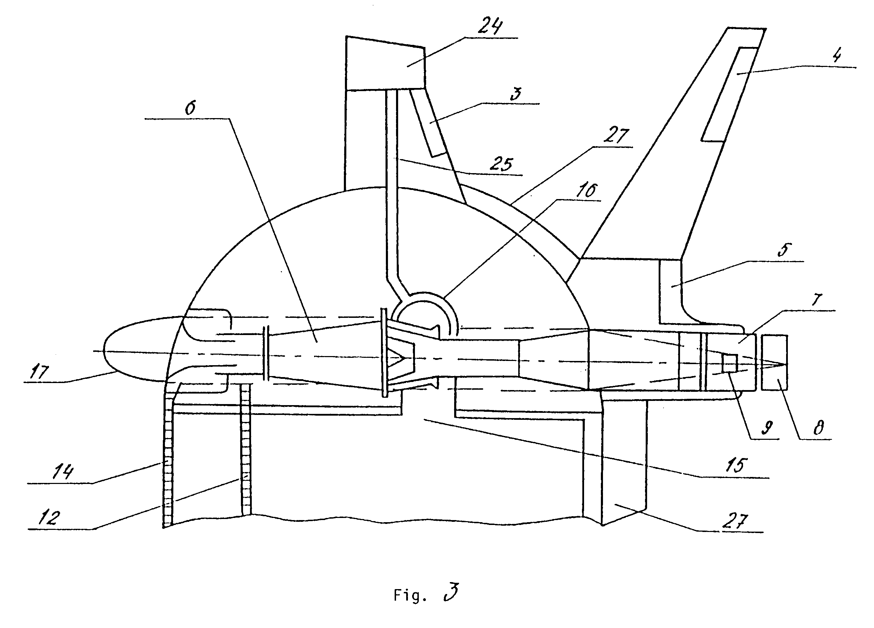

FIG.3 is a top view of the GEM gas-dynamic system;

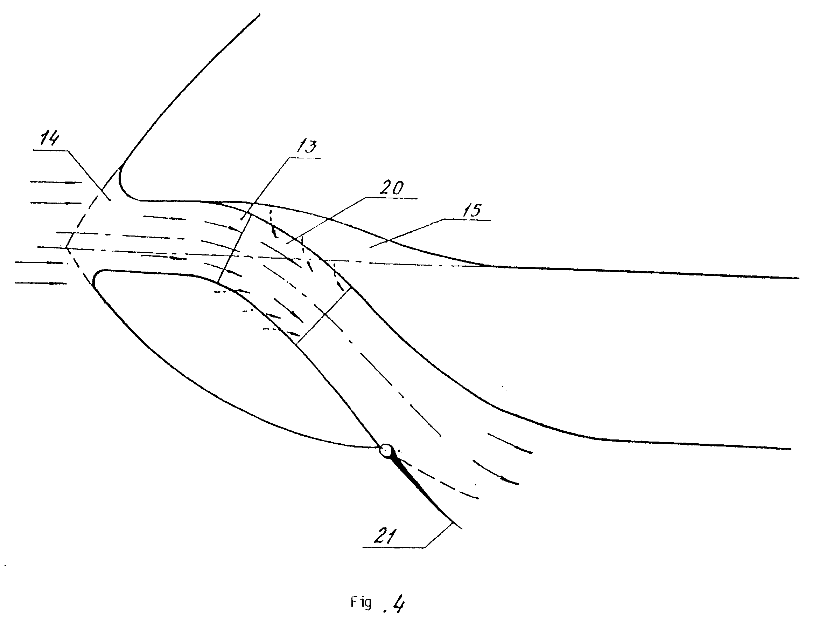

FIG.4 is a flow pattern in the gas-dynamic flow passage of the air-cushion formation system;
FIG.5 is an air-cushion alighting gear as viewed from the skegs; and
FIG.6 is an embodiment of the GEM featuring air bleeding from the gas-dynamic flow passage for air-cushion formation.

Best Method of Carrying Out the Invention

The fuselage of the ground-effect machine or airborne vehicle of the present invention is shaped as a low aspect-ratio lifting wing and consists of a central portion 1, that is, center-wing section, and two side fairings 2.

The nose and rear of the GEM fuselage are mutually symmetrical. The upper surface of the center-wing section 1 is shaped as a cylindrical segment, while that of the side fairings 2 is a spherical one smoothly joined together with the surface of the center-wing section 1.

The lower fuselage surface is flat and rounded-off at the joint with the upper surface.

A prerequisite determining the shape of the fuselage surface is a relatively large profile thickness:

$$1 \geq C > 0.15, \text{ where } C = \frac{C_{max}}{B_o} \; ;$$

$C_{max}$ being the maximum profile thickness, $B_0$ being the chord length.

The side fairings 2 carry stub wings provided with ailerons 3, while a stabilizer having ailerons 4 and flaps 5 is provided on the rear portion of the fairings. A power plant appearing as turbojet engines 6 with planar nozzles 7 is situated either in the side fairings 2 or in the compartments of the GEM center-wing section 1, which are isolated from the passenger compartment. The planar nozzles 7 are equipped with jet vanes 8 for the pitch-channel control, and with a thrust-reversal device 9.

The alighting gear of the GEM appear as a slotted nozzle 12 communicating, through a gas-dynamic flow passage 13, with air intakes 14 situated on the frontal GEM surface. The flow-through section of the gas-flow passage 13 communicates, via gas passages 15, with the second flow of the turbojet engine 6 at whose outlet a gas flow divider 16 is provided. Side skegs 17 are mounted on the GEM bottom serving as the side guards of the airflow and of damping support elements.

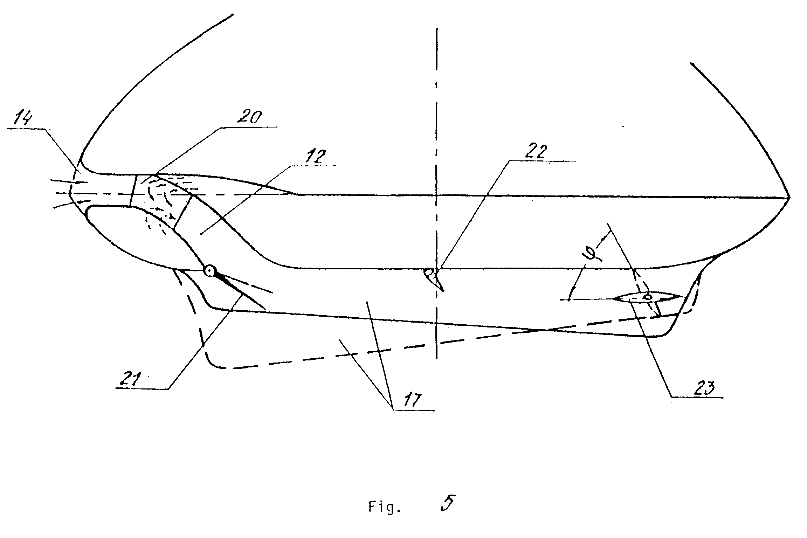

The skegs are provided with a mechanism for their tilting (shown with a dotted line in FIG.5) to establish a pitch angle. With a view to improving the GEM aerodynamic characteristics the skegs are also provided with an actuating mechanism for their retracting to the flight position. The skegs 17 are shaped as air-core tires 19 enclosed in metal holders 18 and provided with a system of valves. The gas-dynamic flow passage 13 may be of diverse types depending on the type of the turbojet engine used. Thus, when air is bled from the engine at a pressure exceeding $1.1 \times 10^5$ Pa, use can be made of an inlet ejector which adds to the efficiency of air-cushion formation. To this end an ejector 20 is provided in the gas-dynamic flow passage 13. Passive air is fed to the ejector from the air intake 14 and active air, from the engine along the gas passage 15. The ejector 20 reduces the pressure in the airflow arriving at the air cushion nozzle 12, thus simultaneously increasing the amount of air fed. Such an action of the ejector is favorable for increasing the height of GEM hovering over the runway surface and for reducing the air-jet effect on the runway surface.

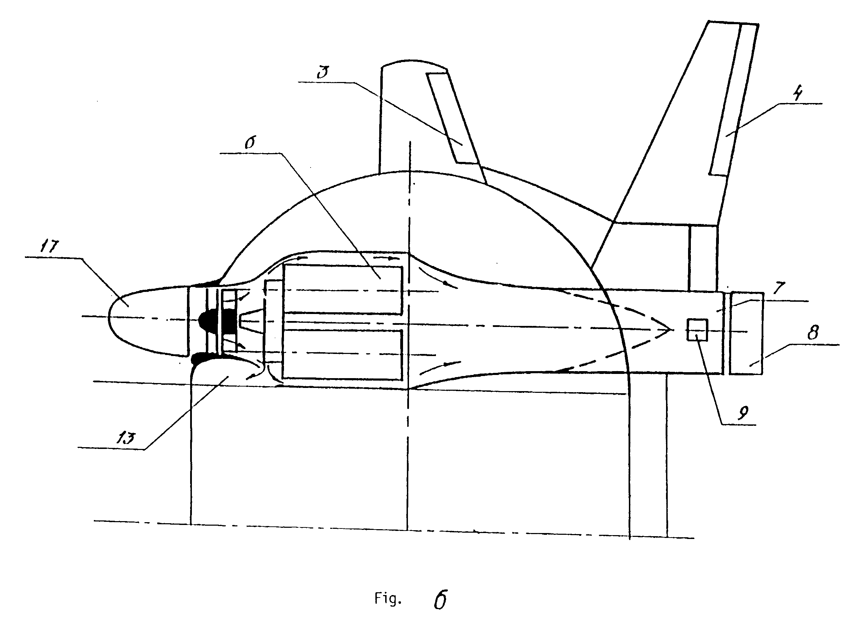

When the GEM power plant makes use of low-pressure featuring the compression ratio equal to or below 1.10, application of an ejector with an air intake is unreasonable. In such a case the gas -dynamic flow passage 13 communicates immediately with the engine passage (FIG.6). Such an embodiment of the air-cushion forming system reduces the GEM weight.

In order to control the parameters of the airflow passing to the air-cushion interior, a lower wall 21 of the nozzle 12 is vectorable.

The nozzle 12 can operate during GEM flight. Under the flying condition it is possible to switch the airflow over from the air-cushion nozzle to the main thrust nozzle. Swivel flaps 22, 23 are provided on the GEM bottom between the skegs 17, said flaps being aimed at pressure control in the air-cushion zone. The flap 22 is situated in the central portion of the bottom and serves for closing the ventral space and displacing the center of pressure on the bottom towards the frontal GEM portion so as to decrease the load on the control system that provides for the required angle of attack during GEM take-off and landing.

The flap 23 is located in the rear portion of the GEM bottom. When swivelled the flap controls the rate of air flow from the air-cushion zone, thus providing the required formation condition thereof during GEM take-off. In addition, the flap 23 is to operate under in-flight conditions as the element of control of the GEM motion in the course of landing.

To eliminate irregular GEM motion on an air-cushion over rough ground or disturbed water, use is made of a jet-vane stabilization system, which incorporates a bank of control jet nozzles 24 provided at the tip of the wing 3, which effect the jaw and roll control of the GEM. The flow-through portion of the jet nozzles communicates with the outlet of the turbojet engine 6 via a passage 25.

To maintain a stable flow-around regime of the GEM, provision is made for a device for fixing the position of airflow detachment from the trailing edge, said device being situated in the GEM portion. The device is to eliminate irregularity of the beginning of interaction of the airflows flowing about the upper and lower fuselage surfaces on a separating surface in the rear GEM portion, which results in stabilization of airflows and to the GEM aerodynamic characteristics. In this particular embodiment of the invention the separating surface is established by the surface of the planar nozzle 7, part of the aerodynamic airfoil of the stabilizing tail fin 4, as well as by a specially provided plate 27. In addition, the separating surface may be defined by a gas flow running out of the planar nozzle 7.

The GEM systems described before function in the various flight modes as follows.

Before turning the engines 6 on the rear flap 23 is made to open and to assume position parallel to the GEM bottom. The front flap 21 is set open so as to reduce the velocity of the airflow running out of the air-cushion planar nozzle. Then the thrust reversal device 9 is turned on, the engines are started and brought to the maximum thrust conditions. Next the engine-tapped actuating air passes from the gas-flow dividers 16 along the gas passage 15 to the air-cushion ejector 20 which sucks air through the air intake 14 and directs the air along the passage 13 to the air-cushion nozzle, whence the air runs out intensely through the GEM rear portion, thus establishing rarefaction under the GEM bottom so as to keep the GEM from displacement over the runway.

Once the engines have been warmed up their rpm is minimized, the rear flap 23 is brought to the position, wherein it shuts up air escape from the air-cushion interior, the thrust reversal device is turned off, and the engines are brought to the maximum thrust conditions. Thus, the GEM takes off and hovers on an air cushion, whereupon it starts moving along the runway while gaining speed. The actuating air fed to the jet nozzle vanes 24, while acting upon the stabilization and control systems, enables the GEM to be roll-stabilized and directional-controlled. The jet vanes 8 are to stabilize the GEM on the pitch channel. As the GEM gains speed and an aerodynamic lift arises, the rear flap gets progressively open. At the instant when the GEM takes off completely the aerodynamic lift is to fully relieve its weight. Thus, the air cushion is no longer necessary, and the rear flap 23 is to be set open (that is, parallel to the GEM bottom) so as not to prevent the air stream from flowing out of the slotted nozzle 12, which enables, with the aid of the inlet ejector 20, a thrust to be established that exceeds the loss of engine thrust due to air bleeding for the air cushion formation. Thus, such a thrust augmentation improves the GEM speed-gain dynamics and accelerates its climbing.

The jet vanes 8 keep the GEM in a horizontal position as to the pitch channel until the GEM takes off completely. At the instant of the GEM take-off the jet vanes are set to the position, wherein a positive pitching moment is developed. At the same instant the swivelling wall of the nozzle 12 narrows its flow-through area, thereby increasing the jet exhaust velocity which also results in the development of a positive pitching moment. Besides, said moment can be increased by extension of the middle flap 22, too. At the instant when the jet vane is put over the GEM ascends, by virtue of the ground effect, for a height equal to 0.1 - 0.2 the central fuselage chord, turns to a positive pitch angle with the use of the aforedescribed positive longitudinal (pitching) moments, and starts climbing. As the GEM gains altitude the jet vanes are set to the horizontal position and the GEM goes to the cruising flight mode with a small angle of attack.

When the GEM approaches for landing, first the flying speed is reduced without loss of altitude. To this end the flap 23 is being gradually closed so that the drag increases and the flying speed decreases, while the aerodynamic lift remains virtually unaffected, or decreases insignificantly.

Once the rear flap 23 has been fully deflected, the aerodynamic lift starts decreasing, as soon as the flying speed drops down to a certain value, with the result that the flight altitude decreases, too. To ensure against too a rapid GEM descent, the angle of attack is increased, with the aid of the air vanes 5 or jet vanes 8, but not in excess of 80% of the critical angle at which airflow separation from the airfoil occurs. When approaching the runway the skegs in the GEM provided with a device for skeg extension and varying their angle to the GEM, are set to the "Landing" position. Once the skegs have assumed the position parallel to the runway and the GEM has bean set to the pitch angle with respect to the runway, the GEM starts performing level flight at a small height over the runway surface due to the ground effect and the presence of an air cushion. This section of the GEM levelling-out terminates in closing the flaps, with the result that an abrupt loss of the aerodynamic lift and an increased drag to the GEM motion occur. While losing the aerodynamic lift the GEM descends onto the air cushion and performs further motion on said cushion alone. Once the GEM has descended onto the air cushion, the engines are brought to idling, the thrust reversal is turned on, and the engines are brought to full rating so as to brake the GEM by virtue of the thrust reversal mechanism. At the instant of the GEM dead braking the rear flap 23 is fully opened so as to make the GEM get in contact with the runway, whereupon the engines are turned off. The position of the front flap 21 remains unaffected until the GEM is brought to the levelling-out section nearby the runway. This done, the front flap 21 is opened, thus reducing the velocity of the jet flowing out the air-cushion nozzle and preventing the jet from separation off the nozzle walls. When the GEM moves near the runway, pitch-channel stabilization and jaw-channel control are carried out with the aid of the jet nozzle vanes 24, and the pitch-channel stabilization, by means of the jet vanes 8. During free flight the roll- and pitch-channel control can be effected with the use of the air vanes.

Industrial Applicability

The herein-proposed ground-effect machine features a high aerodynamic fineness ratio due to a reduced level of all components of the aerodynamic drag:

$$C_x = C_{xi} + C_{xp} + C_{x\tau} + C_{xQ} \, ,$$

where

$C_{xi}$     is induced drag,
$C_{xp}$     is profile drag,
$C_{x\tau}$     is friction drag, and
$C_{xQ}$     is energy consumed for boundary layer control.

Low value of $C_{xi}$ due to a low value of the aerodynamic lift ($C_L$) coefficient, thought quite sufficient to provide a required lift with a large GEM area.

Low profile drag ($C_{xp}$) is due to absence of any elements protruding beyond the outline of the GEM and due to power-plant accommodation in the GEM fuselage. The value of $C_{x\tau}$ is reduced due to zero-reduced friction forces on surface area occupied by the vortex cells.

Low power consumption ($C_{xQ}$) is due to a perfect boundary layer control system carried out with the aid of vortex cells.

The appropriate design and experimental studies give evidence that the proposed GEM features high flight and technical characteristics.

Given below are geometrical and flight-and-technical characteristics of the herein-proposed ground-effect machine of three modifications differing in the load-carrying capacity, said characteristics appearing in a tabular form.

| Characteristics | Rating | | |
|---|---|---|---|
| 1 | 2 | 3 | 4 |
| Air-borne gross weight, t | 9 | 35 | 300 |
| Cargo weight:number of passengers, t/men | 2.5/24 | 10/80 | 100/1000 |
| Flying speed, km/h | 470 - 650 | 470 - 650 | 470 - 650 |
| Flight altitude, km | 5.5 - 6.0 | 8.5 - 10 | 8.5 - 10 |
| Flying range, km | 2000 | 4500 | 8600 |
| Fuel weight, t | 1.5 | 10 | 100 |
| Construction weight, t | 5.0 | 15 | 100 |
| Length, m | 11 | 20 | 59 |
| Span, m | 14.4 | 31.3 | 91.6 |
| Height, m | 3.1 | 6.7 | 19.6 |
| Plan area, $m^2$ | 88 | 400 | 3430 |
| Air-cushion area, $m^2$ | 23 | 75 | 640 |
| Wing load, $kg/m^2$ | 102 | 125 | 125 |
| Specific ground pressure, $kg/m^2$ | 380 | 500 | 500 |
| Type of engines | AD-34 | D/436 | HK-92 |
| Specific fuel consumption per passenger per km, g | 14 | 11 | 10 - 11 |
| Thrust-weight ratio | 0.31 | 0.37 | 0.36 |
| Take-off distance, m | 400 | 450 | 500 |
| Type of runway | soil/water | soil/water | soil/water |
| Thrust, t | 4x0.85 | 2x7.0 | 6x18 |

**Claims**

1. A ground-effect airborne vehicle
   comprising a fuselage in the form of a lifting wing, a power plant, an air-cushion alighting gear and a flight control and stabilization system,
   **characterized by**
   means for the formation of the air cushion comprising

   a slotted nozzle (12) located in the frontal part of the bottom of the fuselage and connected through a gas-dynamic flow passage (13) to the power plant (6),
   side skegs (17) at the bottom of the fuselage spaced apart from each other and forming lateral skirts for the air cushion,
   a rear movable flap (23) extending between the side skegs (17) on the bottom of the fuselage at its stern part,

a boundary layer control system having vortex cells at the wing rear upper surface for improving airflow conditions, and

a device for fixing the position of airflow detachment from the trailing edge of the wing.

2. A ground-effect airborne vehicle according to claim 1, characterized in that the gas-dynamic flow passage (13) communicates with the power plant (6) through a gas passage (15) provided with a flow divider (16), and air intakes (14) are provided on the frontal part of the fuselage, said air intakes (14) communicating with the gas-dynamic flow passage (13).

3. A ground-effect airborne vehicle according to claim 1 or 2, characterized in that an ejector (20) is provided in the gas-dynamic flow passage (13).

4. A ground-effect airborne vehicle according to one of the claims 1 to 3, characterized in that the bottom wall (21) of the slotted nozzle (12) is a swivelling one.

5. A ground-effect airborne vehicle according to one of the claims 1 to 4, characterized in that an additional swivel flap (22) is provided in the middle portion of the bottom and extending between the side skegs (17), said flap (22) being aimed at controlling the position of the center of pressure on the bottom.

6. A ground-effect airborne vehicle according to one of the claims 1 to 5, characterized in that the skegs (17) are movable mounted at the bottom of the fuselage and are provided with a mechanical actuator for their displacement as for height relative to the fuselage and angle of incline around a transverse axis.

7. A ground-effect airborne vehicle according to one of the claims 1 to 6, characterized in that the skegs (17) are shaped as air-core tires (19) enclosed in metal holders (18).

8. A ground-effect airborne vehicle according to one of the claims 1 to 7, characterized in that the fuselage top surface is shaped as a cylindrical segment (1) joined at the sides together with spherical fairings (2).

9. A ground-effect airborne vehicle according to claim 8, characterized in that the power plant (6) is situated under the fairings (2) and the interior space of the cylindrical segment (1) forms a cargo and passenger compartment.

10. A ground-effect airborne vehicle according to claim 8, characterized in that the power plant (6) is situated in the interior space of the cylindrical segment (1) and the cargo and passenger compartments are located in the side fairings (2).

11. A ground-effect airborne vehicle according to one of the claims 1 to 10, characterized in that the device for fixing the position of the airflow detachment from the trailing edge appears as a separating surface which serves as the boundary between the airflow streams past the upper and the lower fuselage portions.

12. A ground-effect airborne vehicle according to claim 11, characterized in that the separating surface is shaped as a baffler (27).

13. A ground-effect airborne vehicle according to claim 11, characterized in that the separating surface is formed by at least a part of the planar exhaust nozzle (7) of an engine of the power plant (6).

14. A ground-effect airborne vehicle according to claim 11, characterized in that the separating surface is formed by at least a part of the aerodynamic surfaces such as wings or stabilizing fins (4) of the vehicle.

15. A ground-effect airborne vehicle according to claim 11, characterized in that the separating surface is formed by at least a part of the surface of jet vanes (8) provided for pitch control at the rear of the planar exhaust nozzles (7).

16. A ground-effect airborne vehicle according to any one of the preceding claims, characterized in that the stabilization system is shaped as banks of jet nozzle vanes (24) situated at the sides of the fuselage.

17. A ground-effect airborne vehicle according to one of the claims 8 - 16, characterized in that the fuselage is in the form of a thick wing of small extension with a thickness ratio of the profile $1 \geq C > 0,15$ with C being the maximum profile thickness divided by the chord lenght.

**Patentansprüche**

1.  Bodeneffekt-Fluggerät mit einem Rumpf in Form einer Tragfläche, einem Antrieb, einer Luftkissen-Landeeinrichtung sowie einer Flugsteuerung und einem Stabilisierungssystem, **dadurch gekennzeichnet**, daß die Mittel zur Bildung des Luftkissens eine geschlitzte Düse (12) aufweisen, die im Vorderteil des Bodens des Rumpfes angeordnet ist und die durch einen gasdynamischen Flußkanal (13) mit dem Antrieb (6) verbunden ist, daß am Rumpfboden voneinander beabstandete Seitenkufen (17) angeordnet sind, die seitliche Schürzen für das Luftkissen bilden, daß eine sich zwischen den Seitenschürzen (17) erstreckende bewegliche Klappe (23) am Heck des Rumpfbodens angeordnet ist, daß ein Grenzschichtregelsystem mit Wirbelzellen an der oberen rückwärtigen Oberfläche der Tragfläche zur Verbesserung der Strömungsverhältnisse vorhanden sind und daß eine Vorrichtung zur Fixierung des Ortes der Strömungsablösung von der Flügelhinterkante vorgesehen ist.

2.  Bodeneffekt-Fluggerät nach Anspruch 1, **dadurch gekennzeichnet**, daß der gasdynamische Flußkanal (13) mit dem Antrieb (6) über eine Gaspassage (15) zusammenwirkt, die einen Strömungsteiler aufweist, und daß Lufteinlässe (14) am Vorderteil des Rumpfes angeordnet sind, wobei die Lufteinlässe (14) mit dem gasdynamischen Flußkanal (13) zusammenwirken.

3.  Bodeneffekt-Fluggerät nach Anspruch 1 oder 2, **dadurch gekennzeichnet**, daß im gasdynamischen Flußkanal (13) ein Ejektor (20) angeordnet ist.

4.  Bodeneffekt-Fluggerät nach einem der Ansprüche 1 bis 3, **dadurch gekennzeichnet**, daß die Bodenwandung (21) der geschlitzten Düse (12) schwenkbar ist.

5.  Bodeneffekt-Fluggerät nach einem der Ansprüche 1 bis 4, **dadurch gekennzeichnet**, daß am mittleren Abschnitt des Bodens eine zusätzliche schwenkbare Klappe (22) angeordnet ist, die sich zwischen den Seitenschürzen (17) erstreckt, wobei die zusätzliche Klappe (22) dazu dient, die Position des Druckzentrums des Bodens zu steuern.

6.  Bodeneffekt-Fluggerät nach einem der Ansprüche 1 bis 5, **dadurch gekennzeichnet**, daß die Schürzen (17) beweglich am Rumpfboden befestigt sind und eine mechanische Betätigung für ihre Verstellung hinsichtlich ihrer Höhe zum Rumpf und ihres Neigungswinkels um die Querachse aufweisen.

7.  Bodeneffekt-Fluggerät nach einem der Ansprüche 1 bis 6, **dadurch gekennzeichnet**, daß die Schürzen (17) als in Metallhaltern (18) eingeschlossene Luftreifen (19) ausgebildet sind.

8.  Bodeneffekt-Fluggerät nach einem der Ansprüche 1 bis 7, **dadurch gekennzeichnet**, daß die Rumpfoberfläche als zylindrisches Segment (1) ausgebildet ist, das an den Seiten mit sphärischen Verkıeidungen (2) verbunden ist.

9.  Bodeneffekt-Fluggerät nach Anspruch 8, **dadurch gekennzeichnet**, daß der Antrieb (6) unterhalb der Verkleidungen (2) angeordnet ist und daß das zylindrische Segment (1) ein Last- und Passagierabteil bildet.

10. Bodeneffekt-Fluggerät nach Anspruch 8, **dadurch gekennzeichnet**, daß der Antrieb (6) im Innenraum des zylindrischen Segments (1) und die Fracht- und Passagierabteile in den Seitenverkleidungen (2) angeordnet sind.

11. Bodeneffekt-Fluggerät nach einem der Ansprüche 1 bis 10, **dadurch gekennzeichnet**, daß die Vorrichtung zur Festlegung des Ortes der Strömungsablösung vom rückwärtigen Tragflächenbereich als Trennfläche ausgebildet ist und als Grenze zwischen den Luftströmungen hinter den oberen und unteren Rumpfteilen dient.

12. Bodeneffekt-Fluggerät nach Anspruch 11, **dadurch gekennzeichnet**, daß die Trennfläche als Leitblech (27) ausgebildet ist.

13. Bodeneffekt-Fluggerät nach Anspruch 11, **dadurch gekennzeichnet**, daß die Trennfläche mindestens zum Teil von der ebenen Schubdüse (7) eines Motors des Antriebs (6) gebildet wird.

14. Bodeneffekt-Fluggerät nach Anspruch 11, **dadurch gekennzeichnet**, daß die Trennfläche mindestens teilweise von den aerodynamischen Oberflächen wie Tragflächen oder Stabilisierungsflossen des Gerätes gebildet wird.

15. Bodeneffekt-Fluggerät nach Anspruch 11, **dadurch gekennzeichnet**, daß die Trennfläche mindestens teilweise durch die Oberfläche von Düsenschaufeln (8) gebildet wird, die am rückwärtigen Ende der Schubdüsen (7) angeordnet sind und der Blattverstellung dienen.

**16.** Bodeneffekt-Fluggerät nach einem der vorhergehenden Ansprüche, **dadurch gekennzeichnet**, daß das Stabilisierungssystem aus geneigt stehenden Düsenschaufeln besteht, die an den Rumpfseiten angeordnet sind.

**17.** Bodeneffekt-Fluggerät nach einem der Ansprüche 8 bis 16, **dadurch gekennzeichnet**, daß der Rumpf die Form einer dicken Tragfläche mit geringer Streckung bei einem Dickenverhältnis des Profils von $1 \geq C > 0{,}5$ aufweist, wobei C die maximale Profildicke dividiert durch die Profiltiefe darstellt.

**Revendications**

**1.** Véhicule aéroporté à effet de sol, comprenant un fuselage sous la forme d'une aile portante, une installation de puissance, un appareillage d'atterrissage à coussin d'air et un système de commande de vol et de stabilisation, caractérisé par :

- des moyens pour la formation du coussin d'air, qui comprennent :

-- une buse à fentes (12) située dans la partie frontale du fond du fuselage et connectée par l'intermédiaire d'un passage d'écoulement à dynamique des gaz (13) avec l'installation de puissance (6),
-- des patins latéraux (17) au fond du fuselage et écartés l'un de l'autre en formant des jupes latérales pour le coussin d'air,
-- un volet arrière mobile (23) qui s'étend entre les patins latéraux (17) sur le fond du fuselage à sa partie arrière,

- un système de commande de couche limite comportant des cellules à tourbillons à la surface supérieure arrière de l'aile pour améliorer les conditions d'écoulement d'air, et
- un dispositif pour fixer la position du décollement de l'écoulement d'air depuis le bord de fuite de l'aile.

**2.** Véhicule aéroporté à effet de sol selon la revendication 1, caractérisé en ce que le passage d'écoulement à dynamique des gaz (13) communique avec l'installation de puissance (6) via un passage de gaz (15) pourvu d'un diviseur de flux (16), et en ce que des entrées d'air (14) sont prévues sur la partie frontale du fuselage, lesdites entrées d'air (14) communiquant avec le passage d'écoulement à dynamique des gaz (13).

**3.** Véhicule aéroporté à effet de sol selon l'une ou l'autre des revendications 1 et 2, caractérisé en ce qu'un éjecteur (20) est prévu dans le passage d'écoulement à dynamique des gaz (13).

**4.** Véhicule aéroporté à effet de sol selon l'une des revendications 1 à 3, caractérisé en ce que la paroi inférieure (21) de la buse à fentes (12) est une paroi pivotante.

**5.** Véhicule aéroporté à effet de sol selon l'une des revendications 1 à 4, caractérisé en ce qu'il est prévu un volet pivotant additionnel (22) dans la partie médiane du fond et s'étendant entre les patins latéraux (17), ledit volet (22) étant destiné à commander la position du centre de pression sur le fond.

**6.** Véhicule aéroporté à effet de sol selon l'une des revendications 1 à 5, caractérisé en ce que les patins (17) sont montés de façon mobile sur le fond du fuselage et sont pourvus d'un actionneur mécanique pour le déplacement quant à la hauteur par rapport au fuselage et à l'angle d'inclinaison autour d'un axe transversal.

**7.** Véhicule aéroporté à effet de sol selon l'une des revendications 1 à 6, caractérisé en ce que les patins (17) sont conformés à la manière de bandages à âme d'air (19) enfermés dans des supports en métal (18).

**8.** Véhicule aéroporté à effet de sol selon l'une des revendications 1 à 7, caractérisé en ce que la surface supérieure du fuselage est conformée à la manière d'un segment cylindrique (1) réuni sur les côtés ensemble avec des carénages sphériques (2).

**9.** Véhicule aéroporté à effet de sol selon la revendication 8, caractérisé en ce que l'installation de puissance (6) est située sous les carénages (2) et l'espace intérieur du segment cylindrique (1) forme un compartiment de fret et de passagers.

**10.** Véhicule aéroporté à effet de sol selon la revendication 8, caractérisé en ce que l'installation de puissance (6) est située dans l'espace intérieur du segment cylindrique (1) et les compartiments de fret et de passagers sont situés dans les carénages latéraux (2).

**11.** Véhicule aéroporté à effet de sol selon l'une des revendications 1 à 10, caractérisé en ce que le dispositif pour fixer la position du décollement de l'écoulement d'air depuis le bord de fuite apparaît comme une surface de séparation qui sert de frontière entre les flux de l'écoulement d'air passant par les parties supérieure et inférieure du fuselage.

**12.** Véhicule aéroporté à effet de sol selon la revendication 11, caractérisé en ce que la surface de séparation est conformée à la manière d'un déflecteur (27).

**13.** Véhicule aéroporté à effet de sol selon la revendication 11, caractérisé en ce que la surface de séparation est formée par au moins une partie de la buse d'échappement plane (7) d'un moteur de l'installation de puissance (6).

**14.** Véhicule aéroporté à effet de sol selon la revendication 11, caractérisé en ce que la surface de séparation est formée par au moins une partie des surfaces aérodynamiques telles que des ailes ou des ailettes de stabilisation (4) du véhicule.

**15.** Véhicule aéroporté à effet de sol selon la revendication 11, caractérisé en ce que la surface de séparation est formée par au moins une partie de la surface de gouvernes de jet (8) prévues pour la commande de profondeur à l'arrière des buses d'échappement planes (7).

**16.** Véhicule aéroporté à effet de sol selon l'une quelconque des revendications précédentes, caractérisé en ce que le système de stabilisation est conformé à la manière de groupes de gouvernes à éjecteurs (24) situés sur les côtés du fuselage.

**17.** Véhicule aéroporté à effet de sol selon l'une quelconque des revendications 8 à 16, caractérisé en ce que le fuselage a la forme d'une aile épaisse de petite étendue avec un rapport d'épaisseur du profil $1 \geq C > 0,15$, C étant l'épaisseur de profil maximum divisée par la longueur de la corde.

Fig. 1

Fig. 2

Fig. 3

Fig . 4

Fig. 5

Fig. 6

EP 0 596 131 B1